**Europäisches Patentamt**

(19) **European Patent Office**

**Office européen des brevets**

(11) Veröffentlichungsnummer: **0 134 283**

**B1**

—

(12)                    **EUROPÄISCHE PATENTSCHRIFT**

(45) Veröffentlichungstag der Patentschrift:
14.12.88

(51) Int. Cl.⁴: **G 05 B 19/40**

(21) Anmeldenummer: **83108548.5**

(22) Anmeldetag: **30.08.83**

(54) Verfahren zum Positionieren eines Antriebes einer Arbeitsspindel einer Werkzeugmaschine.

(43) Veröffentlichungstag der Anmeldung:
**20.03.85 Patentblatt 85/12**

(45) Bekanntmachung des Hinweises auf die Patenterteilung:
**14.12.88 Patentblatt 88/50**

(84) Benannte Vertragsstaaten:
**AT BE CH DE FR GB LI**

(56) Entgegenhaltungen:
**EP-A-0 064 391**
**EP-A-0 065 991**
**DE-A-2 334 455**
**GB-A-1 486 428**

(73) Patentinhaber: **SIEMENS AKTIENGESELLSCHAFT ÖSTERREICH, Siemensstrasse 88- 92, A-1210 Wien (AT)**

(72) Erfinder: **Hackl, Franz, Dipl.- Ing., Förstergasse 3/3, A-1210 Wien (AT)**

EP 0 134 283 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung betrifft ein Verfahren zum Steuern eines Antriebes einer Arbeitsspindel einer Werkzeugmaschine in eine Zielposition, wobei der Antrieb durch Vergleich eingegebener Drehzahl-Sollwerte mit von einem Drehzahlgeber erhaltenen Drehzahl-Istwerten von einer Auswertelogik nachgeregelt wird, mit Eintreffen eines Positionierbefehls in einem Vollbremsbereich und einem Positionierbereich ein Drehzahl-Sollwert kleiner als der noch anstehende gewählt und auf ihn umgeschaltet wird und wobei die Arbeitsspindel vom Antrieb nach Übereinstimmung von Drehzahl-Istwert und Drehzahl-Sollwert in eine bestimmte, von der Zielposition abhängige, Einlaufposition geführt und dadurch der Beginn eines Einlaufbereiches markiert wird, in dem ein abnehmender, der Winkelabweichung Proportionaler Drehzahl-Sollwert aufgeschaltet und die Arbeitsspindel in der Zielposition zum Stillstand gebracht wird.

Ein derartiges Verfahren ist aus der EP-A-65 991 bekannt. Die Geschwindigkeit des Antriebes der Arbeitsspindel wird durch Vergleich von Drehzahl-Istwerten und Drehzahl-Sollwerten geregelt. Nach dem Empfang eines Haltesignals schaltet nun eine Auswertelogik auf einen konstanten, kleineren Drehzahl-Sollwert um. Infolgedessen wird auch der Drehzahl-Istwert der Arbeitsspindel herabgesetzt. Erreicht nun die Arbeitsspindel den Drehzahl-Sollwert, so wird innerhalb von 180° vor dem Haltepunkt ein immer stärker abnehmender Drehzahl-Sollwert eingestellt, dem der Drehzahl-Istwert der Arbeitsspindel unmittelbar folgen kann. Wie das Diagramm VCMD' in Fig. 3 dieser Veröffentlichung zeigt, nähert sich die Geschwindigkeit der Arbeitsspindel PS' mit immer steiler werdender Steigung der Tangente (Verzögerung) dem Nullpunkt (Haltepunkt) auf der Zeitachse und wird dadurch hart abgebremst. Dieses Verfahren wird auf den Seiten 12 und 13 der EP-A-65 991 detailliert erläutert.

Beim Positionieren eines Antriebes einer Arbeitsspindel einer Werkzeugmaschine soll der Positioniervorgang nicht nur genau, sondern auch möglichst zeitoptimal durchgeführt werden. Hierzu ist eine Ermittlung des Bremseinsatzpunktes vor Erreichen der Sollposition in Abhängigkeit von einer vorgegebenen Drehzahl erforderlich. Dabei ist zu beachten, daß bei Beschleunigungs- und Bremsvorgängen die maximal zulässige Beschleunigung bzw. Verzögerung des Antriebssystems nicht überschritten wird.

Der Erfindung liegt die Aufgabe zugrunde, ein Positionierverfahren zu schaffen, bei dem in kurzer Zeit die Arbeitsspindel einer Werkzeugmaschine mittels ihres Antriebes genau in eine vorgegebene Position gebracht wird.

Diese Aufgabe wird gemäß Patentanspruch 1 dadurch gelöst, daß während des Vollbremsbereiches der Drehzahl-Sollwert Null vorgegeben wird und im Positionierbereich ein konstanter Drehzahl-Sollwert bis zum Erreichen des Einlaufbereiches aufgeschaltet wird, wenn der Drehzahl-Istwert eine Grenzdrehzahl von etwa doppelter Größe einer Sockeldrehzahl erreicht hat, von der aus die Arbeitsspindel innerhalb des Winkels zwischen der Einlaufposition und der Zielposition angehalten wird.

Durch die Vorgabe des Drehzahl-Sollwertes Null erfolgt ein sehr kurzfristiges Abbremsen des Antriebes und anschließend wird ein Sollwert vorgegeben, von dem man rasch in die Zielposition gelangt. Dadurch ergibt sich eine zeiliche Optimierung des Positioniervorganges.

Vorteilhaft ist es, daß im Einlaufbereich der Drehzahl-Sollwert zumindest anfänglich linear abnimmt. Ein durch Halbleiter bedingtes Driften der Arbeitsspindel bei Stillstand derselben wird durch eine Korrektur des Drehzahl-Sollwertes verhindert.

Die Erfindung wird nachstehend anhand der Figuren näher erläutert.

Es zeigen:

Fig. 1 ein schematisches Blockdiagramm eines Ausführungsbeispieles,

Fig. 2 den Verlauf des Drehzahl-Sollwertes und Drehzahl-Istwertes in Abhängigkeit von der Winkelposition des Antriebes,

Fig. 3 vom inkrementalen Pulsgeber abgegebene Impulsfolgen und

Fig. 4 den am Ausgang des Digital/Analog-Umsetzers anstehenden Drehzahl-Sollwert in Abhängigkeit von der Winkelposition des Antriebes und die dazugehörige Nullmarke.

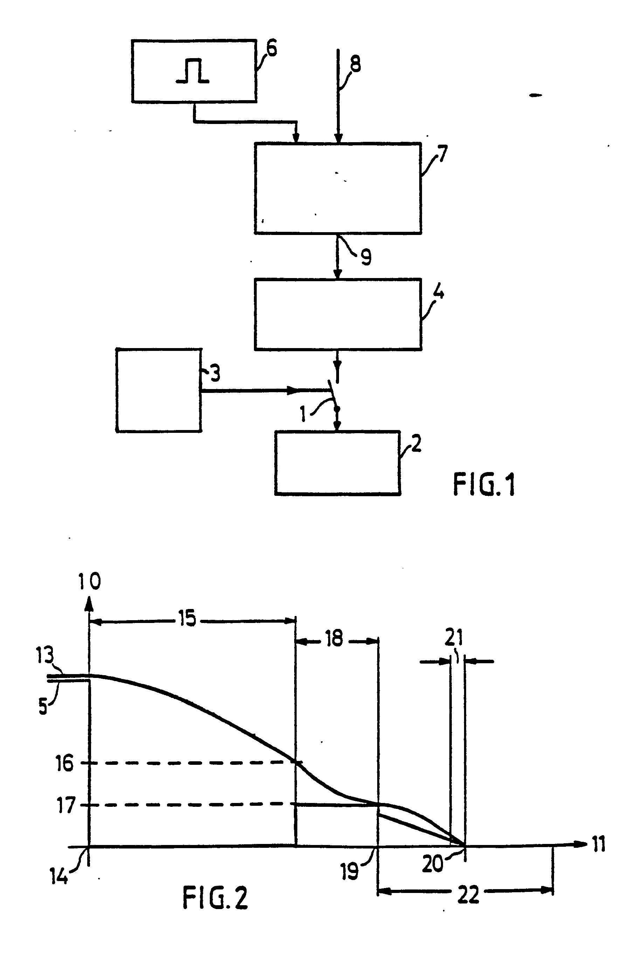

Fig. 1 zeigt ein Blockdiagramm der Vorrichtung zum Positionieren eines Antriebes 2 einer Arbeitsspindel einer Werkzeugmaschine. Ein Positionierbefehl bewirkt, daß mittels eines Schaltelementes 1 der dem Antrieb 2 von einer numerischen Steuerung 3 vorgegebene Drehzahl-Sollwert abgeschaltet wird. Unter dem Antrieb 2 soll hier die Kombination des mit steuerbaren Halbleitern bestückten Motorregelungsgerätes mit Motor und allfälligem Zwischengetriebe zur Arbeitsspindel verstanden werden. Durch Abschalten der numerischen Steuerung 3 wird der Antrieb 2 gebremst. Er wird in den Zielpunkt geführt, in dem die von einem inkrementalen Pulsgeber 6 gelieferten Positionsimpulse einer Zählstufe 7 zugeführt werden. Diese ist mit einem Startsollwert 8 voreingestellt. Der am Zählstufenausgang 9 der Zählstufe 7 anstehende digitale Drehzahl-Sollwert wird von einem Digital/Analog-Umsetzer 4 in einen den Antrieb 2 steuernden Drehzahl-Sollwert umgewandelt.

Fig. 2 zeigt die Abhängigkeit der Drehzahl 10 der Arbeitsspindel von deren Winkelposition 11. Es ist der Verlauf des Drehzahl-Sollwertes 5 und des Drehzahl-Istwertes 13 dargestellt. Der Drehzahl-Sollwert 5 wird mit Eintreffen des Positionierbefehls in einer Bremswinkelposition 14 auf Null gesetzt. Dadurch wird der Antrieb an der Stromgrenze abgebremst, was den parabelförmigen Verlauf des Drehzahl-Istwertes 13 in einem Vollbremsbereich 15 ergibt. Wenn der Antrieb eine Grenzdrehzahl 16 erreicht hat, aus der die Arbeitsspindel innerhalb von etwa 0,75 Umdrehungen angehalten werden kann, wird eine Sockeldrehzahl 17 von etwa der halben Grenzdrehzahl 16 als Drehzahl-Sollwert 5 vorgegeben. Im nun beginnenden Positionierbereich 18 wird die Sockeldrehzahl 17 solange beibehalten, bis Drehzahl-Sollwert 5 und Drehzahl-Istwert 13 übereinstimmen. 180° vor der Zielposition 20 wird eine Einlaufposition 19 erreicht. Jetzt wird ein der Winkelabweichung proportionaler Wert als Drehzahl-Sollwert 5 vorgegeben, der den Antrieb im idealen Fall zur Zielposition 20 führt. Um die unvermeidliche Eingangsdrift der bei der Realisierung verwendeten Halbleiter auszugleichen, wird eine geringfügige Abweichung von der Zielposition 20 korrigiert. Ein Korrekturwert wird bei fast stillstehendem, mit etwa 3 U/min drehenden Antrieb gebildet und dem Sollwert addiert. Das erfolgt in einem Zielbereich 21. Um beide Drehrichtungen im Einlaufbereich 22 zu erfassen, der + 180° bis - 180 ° um die Zielposition 20 liegt, wird ein der Winkelabweichung proportionales Signal benötigt.

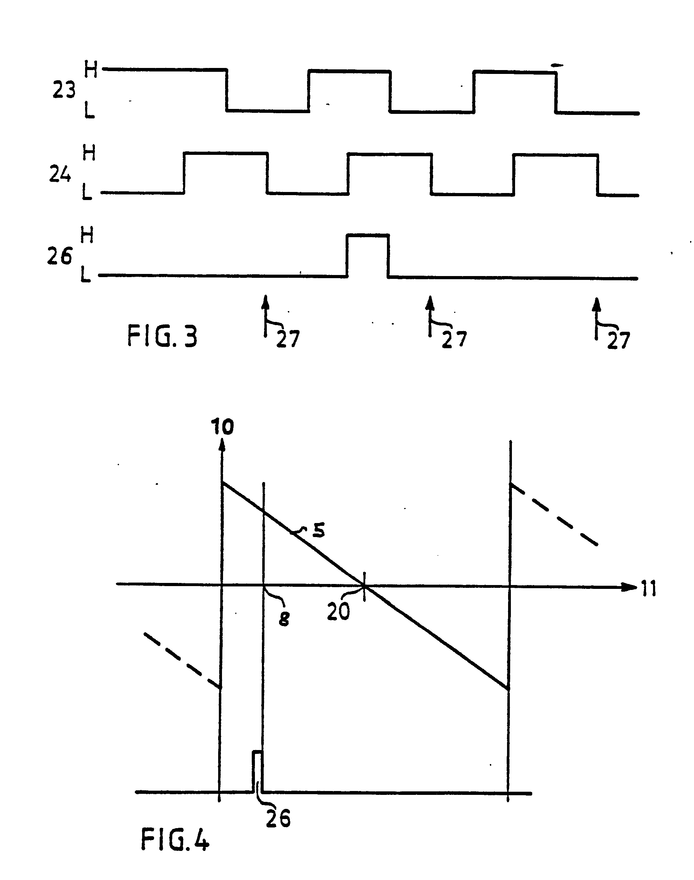

Der Winkel-Istwert bezogen auf die Zielposition 20 wird dadurch gebildet, daß Positionsimpulse 23, 24 und ein Nullmarkenimpuls 26 des inkrementalen Pulsgebers, die in Fig. 3 dargestellt sind, ausgehend vom Nullmarkenimpuls 26 vorzeichenrichtig gezählt werden. An den durch Pfeile 27 markierten Flanken wird ein Zählimpuls gebildet. Das Vorzeichen wird aus der Phasenlage zwischen dem ersten und zweiten Positionsimpuls 23, 24 abgeleitet.

Der im Einlaufbereich am Ausgang des Digital/Analog-Umsetzers anstehende Drehzahl-Sollwert 5 wird dadurch gebildet, daß, wie in Fig. 4 dargestellt, die Zählstufe durch den Nullmarkenimpuls 26 bei Übereinstimmung von Drehzahl-Istwert und Drehzahl-Sollwert auf einen Startsollwert 8 gesetzt wird. In der Mittelzählstellung der Zählstufe liegt am Ausgang des Digital/Analog-Umsetzers null Volt an. Die Mittelzählstellung entspricht der Zielposition 20. Der Nullmarkenimpuls 26 stellt die Zählstufe auf die Summe der Werte der Zielposition 20 und der Mittelzählstellung, die 180° entspricht.

Der automatische Abgleich von unvermeidlichen Driftfehlern, die eine Drehzahlanforderung n = 0 (Stillstand) störend beeinflussen, ist auf einfache Weise möglich, da die Mittelzählstellung der Zählstufe im Zielpunkt der Hälfte des Zählerstandes entspricht. Damit gibt das höchstwertige Bit der Zählstufe die Polarität der Abweichung des Lage-Istwertes vom Lage-Sollwertes an. Als zusätzlicher Sollwert zum eigentlichen Drehzahl-Sollwert treibt er den Antrieb im Zielbereich immer zur Zielposition. Ein von diesem Wert gesteuerter Integrator ermittelt während dieses Vorganges den vom Drehzahlregler verlangten Offsetwert und wird nach Erreichen der Zielposition auf diesem Wert festgehalten. Der automatische Abgleich darf erst dann einsetzen, wenn die Lageabweichungen nunmehr durch Driftfehler verursacht werden. Das ist der Fall, wenn der Antrieb schon beinahe zum Stillstand gekommen ist, d.h. weniger als drei Umdrehungen pro Minute macht. Zur Durchführung des automatischen Abgleichs wird ein monostabiler Multivibrator durch die Zählimpulse dauernd getriggert, sodaß sein Ausgang dauernd gesetzt ist. Erst bei sehr niedriger Frequenz der Zählimpulse kann die monostabile Kippstufe auch rückgesetzt werden. Dann gibt sie ein pulsfrequenzmoduliertes Signal ab, mit dem das Korrektursignal aufgeschaltet wird.

**Patentansprüche**

1. Verfahren zum Steuern eines Antriebes (2) einer Arbeitsspindel einer Werkzeugmaschine in eine Zielposition (20), wobei der Antrieb (2) durch Vergleich eingegebener Drehzahl-Sollwerte (5) mit von einem Drehzahlgeber erhaltenen Drehzahl-Istwerten (13) von einer Auswertelogik nachgeregelt wird, mit Eintreffen eines Positionierbefehles in einem Vollbremsbereich (15) und einem Positionierbereich (18) ein Drehzahl-Sollwert (5) kleiner als der noch anstehende gewählt und auf ihn umgeschaltet wird und wobei die Arbeitsspindel vom Antrieb (2) nach Übereinstimmung von Drehzahl-Istwert (13) und Drehzahl-Sollwert (5) in eine bestimmte, von der Zielposition (20) abhängige, Einlaufposition (19) geführt und dadurch der Beginn eines Einlaufbereiches (22) markiert wird, in dem ein abnehmender, der Winkelabweichung proportionaler Drehzahl-Sollwert (5) aufgeschaltet und die Arbeitsspindel in der Zielposition (20) zum Stillstand gebracht wird, dadurch gekennzeichnet, daß während des Vollbremsbereiches (15) der Drehzahl-Sollwert (5) Null vorgegeben wird und im Positionierbereich (18) ein konstanter Drehzahl-Sollwert (5) bis zum Erreichen des Einlaufbereiches (22) aufgeschaltet wird, wenn der Drehzahl-Istwert (13) eine Grenzdrehzahl (16) von etwa doppelter Größe einer Sockeldrehzahl (17) erreicht hat, von der aus die Arbeitsspindel innerhalb des Winkels zwischen der Einlaufposition (19) und der Zielposition (20) angehalten wird.

2. Verfahren nach Anspruch 1, dadurch gekennzeichnet, daß im Einlaufbereich (22) der Drehzahl-Sollwert (5) zumindest anfänglich linear abnimmt.

3. Verfahren nach Anspruch 1 oder 2, dadurch gekennzeichnet, daß ein durch Halbleiter bedingtes Driften der Arbeitsspindel bei Stillstand derselben durch eine Korrektur des Drehzahlsollwertes (5) verhindert wird.

## Claims

1. A process for controlling a drive (2) of a main spindle of a machine tool into a target position (20), where the drive (2) is regulated by comparing input speed theoretical values (5) with speed actual values (13), obtained from an impulse transmitter, by means of an analysis logic unit, on the arrival of a positioning command in a full braking range (15) and a positioning range (18) a speed theoretical value (5) which is smaller than that still occurring is selected and a switch-over takes place thereto, and where, when speed actual value (13) and speed theoretical value (5) are identical, the main spindle is brought by the drive (2) into a specified run-in position (19) which is dependent upon the target position (20) which thus marks the start of a run-in range (22) in which a reducing speed theoretical value (5), proportional to the angular deviation, is imposed and the main spindle is brought to halt in the target position (20), characterised in that during the full braking range (15) the speed theoretical value (5) of zero is preset, and in the positioning range (18) a constant speed theoretical value (5) is imposed until the run-in range is reached, when the speed actual value (13) has attained a limit speed (16) of approximately double the magnitude of a base speed (17) from which the main spindle is maintained within the angle between the run-in position (19) and the target position (20).

2. A process as claimed in claim 1, characterised in that in the run-in range (22) the speed theoretical value (5) decreases linearly at least initially.

3. A process as claimed in claim 1 or claim 2, characterised in that drifting of the main spindle when it is at a halt, produced by semiconductors, is prevented by correcting the speed theoretical value (5).

## Revendications

1. Procédé pour commander un dispositif (2) d'entraînement d'une broche de travail d'une machine-outil, pour l'amener dans une position prescrite (20), et selon lequel le dispositif d'entraînement (2) est réglé de façon asservie par un circuit logique d'évaluation, moyennant une comparaison de valeurs de consigne introduites (5) de la vitesse de rotation avec des valeurs réelles (13) de la vitesse de rotation, délivrées par un capteur de la vitesse de rotation, lors de l'arrivée d'une instruction de positionnement, une valeur de consigne (5) de la vitesse de rotation inférieure à la valeur de consigne encore présente est sélectionnée dans une zone de freinage maximum (15) et dans une zone de positionnement (18) et une commutation est exécutée sur cette valeur, et selon lequel, des que la valeur réelle (13) de la vitesse de rotation et la valeur de consigne (5) de la vitesse de rotation coïncident, la broche de travail est amenée par le dispositif d'entraînement (2) dans une position déterminée d'approche (19), qui dépend de la position prescrite (20), ce qui provoque le marquage du début d'une zone d'approche (22), dans laquelle une valeur de consigne (5) de la vitesse de rotation, qui diminue et est proportionnelle à l'écart angulaire, est imposée et la broche de travail est amenée à s'arrêter dans la position prescrite (20), caractérisé par le fait que pendant la zone de freinage maximum (15), la valeur de consigne (5) de la vitesse de rotation est fixée à zéro et, dans la zone de positionnement (18), une valeur de consigne constante (5) de la vitesse de rotation est imposée jusqu'à ce que la zone d'approche (22) soit atteinte, lorsque la valeur réelle (13) de la vitesse de rotation a atteint une valeur limite (16) égale approximativement au double d'une vitesse de rotation plancher (17), à partir de laquelle la broche de travail est arrêtée à l'intérieur de l'angle compris entre la position d'approche (19) et la position prescrite (20).

2. Procédé suivant la revendication 1, caractérisé par le fait que, dans la zone d'approche (22), la valeur de consigne (5) de la vitesse de rotation diminue linéairement au moins initialement.

3. Procédé suivant la revendication 1 ou 2, caractérisé par le fait qu'une dérive, conditionnée par des semi-conducteurs, de la broche de travail lors de l'arrêt de cette dernière est empêchée au moyen d'une correction de la valeur de consigne (5) de la vitesse de rotation.

FIG.1

FIG.2

FIG. 3

FIG. 4